# EUROPÄISCHE PATENTANMELDUNG

(11) **EP 1 256 472 A2**
(43) Veröffentlichungstag der Anmeldung: **13.11.2002**
(21) Anmeldenummer: 02006841.7
(22) Anmeldetag: 26.03.2002
(51) Int. Cl.: B60J 7/00

(54) **Sonnenrollo für ein Fahrzeugdach**

(30) Priorität: 09.05.2001 DE 10122570
(71) Anmelder: Webasto Vehicle Systems International GmbH, 82131 Stockdorf (DE)
(72) Erfinder: Kralik, Martin, 82362 Weilheim (DE); Braun, Robert, 82335 Berg (DE); Schulz, Horst-Martin, 81375 München (DE); Schwarzenbart, Thomas, 82152 Kailling (DE)
(74) Vertreter: Konnerth, Dieter Hans

(57) **Zusammenfassung**

Die Erfindung betrifft ein Sonnenrollo für ein Fahrzeugdach (2) mit einer unterhalb des Daches angeordneten und auf eine Wickelspule (6) aufwickelbaren Rollobahn (5), deren gegenüberliegende Seitenränder in Rollo-Bewegungsrichtung an Führungsschienen (7) verschiebbar geführt sind und in Querrichtung unter Vorspannung der Rollobahn (5) gehalten sind. Zum Erzeugen der Vorspannung in Querrichtung ohne an der Rollobahn fest angebrachte Spannelemente oder Spriegel, die das Aufwickeln behindern würden, ist vorgesehen, daß an den Führungsschienen (7) geführte Eingriffselemente an die Seitenränder der Rollobahn (5) ankoppelbar sind und daß die angekoppelten Eingriffselemente die Rollobahn (5) in Querrichtung unter Vorspannung halten. Damit kann das Sonnenrollo (4) unter einem gewölbten Fahrzeugdach (2) angeordnet sein und der Dachwölbung folgen.

## Beschreibung

Die Erfindung betrifft ein Sonnenrollo für ein Fahrzeugdach mit einer unterhalb des Daches angeordneten und auf eine Wickelspule aufwickelbaren Rollobahn, deren gegenüberliegende Seitenränder in Rollo-Bewegungsrichtung an Führungsschienen verschiebbar geführt sind und in Querrichtung unter Vorspannung der Rollobahn gehalten sind.

Aus der DE 197 39 919 A1 ist ein derartiges Sonnenrollo bekannt geworden, bei dem an den Seitenrändern der Rollobahn eine Randversteifung gebildet ist, beispielsweise in Form eines U-förmigen aufgespritzten Kunststoffrandes, die in einem abgewinkelten Führungsbereich der Führungsschiene verschiebbar aufgenommen ist und aufgrund ihrer Steifigkeit und größeren Dicke in Querrichtung aus der Führungsschiene nicht herausgleiten kann. Beim Aufwickeln der Rollobahn auf die Wickelwelle ist jedoch der verdickte Rand nachteilig, da über die Länge der Wickelwelle ein ungleichmäßiger Wickeldurchmesser entsteht.

Aus der US 6,161,893 A (WO 96/01191) ist ein Sonnenrollo für Fahrzeugdächer bekannt geworden, das eine Rollobahn mit mehreren Spriegeln aufweist, die in seitlichen Führungsschienen geführt sind. Beim Abwickeln der Rollobahn von der Wickelwelle werden die Spriegel durch die beiden Führungsschienen in vertikaler Richtung gewölbt, so daß die Rollobahn gespannt gehalten ist. Beim Aufwickeln der Rollobahn vergrößern die Spriegel den Wickeldurchmesser jedoch beträchtlich und die Spriegel verursachen einen ungleichmäßigen Wickelvorgang.

Aufgabe der Erfindung ist es, ein eingangs genanntes Sonnenrollo zu schaffen, das gegenüber den bekannten Konstruktionen verbessert ist und insbesondere kein übermäßiges Wickelvolumen erfordert.

Diese Aufgabe wird durch ein Sonnenrollo mit den Merkmalen des Anspruchs 1 gelöst. Da die Eingriffselemente erst beim Abrollen und Ausziehen der Rollobahn von der Wickelwelle an der Rollobahn angekoppelt werden und somit bei der aufgerollten Rollobahn keine randseitigen Spann- oder Halteelemente angeordnet sind, ist die Dicke der Rollobahn und damit auch der Wickeldurchmesser über die gesamte Breite der Rollobahn gleichmäßig und auch vergleichsweise gering, so daß das Sonnenrollo bzw. die Wickelwelle nur geringen Einbauraum benötigt. Die Rollobahn besteht aus einem üblichen Rollostoff, der lichtundurchlässig oder lichtteildurchlässig ist und beispielsweise eine Netzstruktur enthält. Das Sonnenrollo eignet sich aufgrund der Querspannung der Rollobahn nicht nur für ebene, sondern auch für in Längsrichtung gekrümmte Sonnenrollos, die der Krümmung oder Wölbung des Fahrzeugdaches folgen.

Vorteilhafte Ausgestaltungen des Sonnenrollos sind in den Unteransprüchen angegeben.

Vorzugsweise ist im Bereich des vorderen Auszugsrands der Rollobahn, der z. B. von einem Zugspriegel gebildet ist, ein Haupteingriffselement am jeweiligen Seitenrand in Eingriff, über das die Rollobahn in Rollo-Bewegungsrichtung mit den Eingriffselementen gekoppelt ist. Der Eingriff des Haupteingriffselements ist somit primär zum Übertragen von Längskräften vorgesehen, kann jedoch auch zusätzlich Querkräfte zum Erzeugen der Querspannung übertragen.

Vorzugsweise sind die Eingriffselemente an einem zugfesten Trägerelement, insbesondere einem Seil, voneinander beabstandet angeordnet. Die Eingriffselemente, die beispielsweise kugelförmig oder als Quader bzw. Scheiben oder Platten gebildet sind und insbesondere eine äußere flache oder ebene Seite als Eingriffseite aufweisen, sind z. B. aus Kunststoff oder Metall gebildet und an dem Seil oder einer Schnur festgepreßt. In bevorzugter Gestaltung bilden die Eingriffselemente eine umlaufende Antriebskette, die über ein mit der Wickelwelle gekoppeltes Antriebsrad geführt ist. Jedoch können die Eingriffselemente auch an festen, verschiebbaren Trägerteilen vorgesehen sein wie z. B. Schienen, Schienenstücken oder Zahnstangen.

Dadurch, daß gemäß einer bevorzugten Ausführungsform die Eingriffselemente in Ausnehmungen an den Seitenrändern eingreifen und in den Ausnehmungen mit Spiel in Rollo-Bewegungsrichtung aufgenommen sind, kann die Längsspannung in der Rollobahn ohne Verspannung gegenüber einzelnen Eingriffselementen eingestellt werden.

Zweckmäßigerweise enthält jede Führungsschiene für die Eingriffselemente einen Kanal, der in einem Führungsschlitz für den Seitenrand der Rollobahn gebildet ist. In dem Kanal können die Eingriffselemente in Längsrichtungen gemeinsam mit der Rollobahn bewegt werden, während sie in Querrichtung, insbesondere zur Mitte der Rollobahn hin, abgestützt sind und somit die Spannkraft für die Rollobahn in Querrichtung aufbringen können. Des weiteren kann die Führungsschiene einen Rücklaufkanal für die Eingriffselemente aufweisen, in dem die umlaufende Antriebskette wieder zurückgeführt wird. Der Rücklauf der Eingriffselemente kann jedoch auch außerhalb der Führungsschiene erfolgen.

Wenn das Antriebsrad über eine Feder mit der Wickelwelle gekoppelt ist und über die Antriebskette, den Seitenrand der Rollobahn, die Wickelwelle und das Antriebsrad ein geschlossener Kraftfluß gebildet ist, so kann die Rollobahn in jede beliebige Stellung ausgezogen werden und darin ohne zusätzliche Blockiereinrichtung angeordnet werden. Durch den geschlossenen Kraftfluß und die Federvorspannung ist die Rollobahn in Längsrichtung gespannt. Wenn des weiteren die Feder eine torsionsbelastete Schraubenfeder ist, die beim Abwickeln der Rollobahn aufgrund des variierenden Wickeldurchmessers gegenüber dem konstanten Durchmesser des Antriebsrades eine Vorspannungsveränderung erfährt, so kann beim Ausziehen der Rollobahn die Spannung erhöht werden, so daß auch z. B. bei geöffnetem Dach einem Flattern der ausgezogenen Rollobahn entgegengewirkt wird.

Der Zugspriegel des Sonnenrollos kann manuell oder über einen Antrieb betätigbar sein. Des weiteren kann eine Antriebseinrichtung mit einem Antriebsmotor vorgesehen sein, von dem jeweils ein Antriebskabel zu jeder Führungsschiene verläuft und mit der Rollobahn verbunden oder gekoppelt ist, die von einer durch Federkraft vorgespannten Wickelwelle abwickelbar ist. Dabei kann das Antriebskabel z. B. mit einem Zugspriegel der Rollobahn verbunden sein oder mit einer die Eingriffselemente tragenden Antriebskette, die an die Rollobahn eingekoppelt werden.

Zweckmäßigerweise werden die Eingriffselemente in einem Einlaufabschnitt in den Eingriff mit dem Seitenrand der in Querrichtung nicht gespannten Rollobahn gebracht und die Rollobahn wird in oder anschließend an diesen Einlaufabschnitt in Querrichtung gespannt.

Statt einer umlaufenden Antriebskette kann die die Eingriffselemente enthaltende Antriebskette ein freies Auslaufende aufweisen, das in einen Rücklaufkanal der Führungsschiene oder in ein Auslaufrohr eingeschoben wird. Die Antriebskette ist dann ausreichend drucksteif gebildet und/oder gegen seitliches Ausweichen geführt.

Gemäß einem weiteren bevorzugten Ausführungsbeispiel kann vorgesehen sein, daß die Rollobahn an ihren Seitenrändern Zähne enthält, daß an den beiden Enden der Wickelwelle jeweils ein die Antriebskette führendes Kettenrad drehfest mit der Wickelwelle angebracht ist und das Kettenrad Zähne für einen jeweiligen Eingriff mit den Eingriffselementen der Antriebskette aufweist, daß die Zähne des Kettenrades bei gemeinsamer Rotation des Kettenrades mit der Wickelwelle über die zugeordneten Zähne am Seitenrand der aufgewickelten Rollobahn positioniert werden und anschließend durch Lücken zwischen den Zähnen der Rollobahn hindurchtreten, wobei die Antriebskette während dem Abwickeln der Rollobahn von der Wickelwelle mit Ausnehmungen an den Zähnen der Rollobahn in Eingriff kommt und mit der Rollobahn weiterbewegt wird. Die Antriebskette wird somit in ihrer Längsbewegungsebene auf den Seitenrand der Rollobahn aufgelegt, während die Zähne des Kettenrades durch die jeweiligen Lücken am Rand der Rollobahn nach unten wegschwenken. Die Querspannung wird anschließend in einem schräg verlaufenden Führungsabschnitt der Führungsschiene erzeugt.

Gemäß einem weiteren bevorzugten Ausführungsbeispiel sind die Eingriffselemente Abschnitte eines schrauben- oder schneckenförmigen Antriebsteils, die in Ausnehmungen am Seitenrand der Rollobahn eingreifen, durch Rotation des Antriebsteils um seine Längsachse in Längsrichtung bewegt werden und dabei die zwischen zwei Führungsteilen geführte Rollobahn mitnehmen. Die Antriebsbewegung erfolgt somit in einem Gleiteingriff zwischen den sich scheinbar in Längsrichtung weiterbewegenden Abschnitten des schrauben- oder schneckenförmigen Antriebsteils und den Ausnehmungen der Rollobahn. Da das Antriebsteil keine tatsächliche Längsbewegung ausführt, ist auch keine Rückführung für eine umlaufende Antriebskette oder für ein Auslaufende einer Antriebskette erforderlich, wodurch geringer Platzbedarf an der Führungsschiene erforderlich ist.

Grundsätzlich kann vorgesehen sein, daß die Führungsschienen in Querrichtung einstellbar oder daß sie federelastisch gelagert sind. Damit können Lagetoleranzen, die bei der Montage oder im Betrieb entstehen, nachträglich ausgeglichen werden.

Das Fahrzeugdach kann allgemein einen festen transparenten Dachabschnitt oder eine Dachöffnung mit einem bewegbaren insbesondere transparenten Dekkel aufweisen, worunter das Sonnenrollo angeordnet ist.

Nachfolgend wird das Sonnenrollo anhand von Ausführungsbeispielen unter Bezugnahme auf die Zeichnungen näher erläutert. Es zeigt:
- Fig. 1: in Draufsicht in schematischer Darstellung ein Fahrzeugdach mit einem festen Glasdeckel und einem darunter angeordneten Sonnenrollo;
- Fig. 2: in perspektivischer Explosionsansicht in ausschnittweiser Darstellung das Sonnenrollo;
- Fig. 3: in Draufsicht in ausschnittweiser Darstellung einen Seitenrand einer Rollobahn des Sonnenrollos im Eingriff mit einer Antriebskette;
- Fig. 4: in einer perspektivischen Schnittansicht eine Führungsschiene des Sonnenrollos mit einer darin geführten Antriebskette;
- Fig. 5: in einer perspektivischen Schnittansicht ein weiteres Ausführungsbeispiel der Führungsschiene mit einer abgewandelten Antriebskette;
- Fig. 6: in einer perspektivischen Schnittansicht ein vorderes Endstück der Führungsschiene;
- Fig. 7: in einer Seitenansicht in schematischer Darstellung das Sonnenrollo;
- Fig. 8: in einer Seitenansicht in schematischer Teildarstellung eine Variante des Sonnenrollos;
- Fig. 9: in einer Schnittansicht eine Wickelwelle mit einem Endlagerteil;
- Fig. 10: in einer Oberansicht einen Ausschnitt des Sonnenrollos im Bereich der Wickelwelle und der Zuführung der Antriebskette an die Rollobahn;
- Fig. 11: in einer Oberansicht ein weiteres Ausführungsbeispiel eines Sonnenrollos;
- Fig. 12: in einer seitlichen Ansicht den Bereich der Wickelwelle des Ausführungsbeispiels der Fig. 11;
- Fig. 13: in einer Schnittansicht eine Befestigung der Führungsschiene an einem Dachrahmenteil;
- Fig. 14: in einer Schnittansicht ein weiteres Ausführungsbeispiel einer Befestigung der Führungsschiene an einem Dachrahmenteil;
- Fig. 15: in einer Draufsicht die Befestigung der Führungsschiene am Dachrahmenteil gemäß Fig. 14;
- Fig. 16: in einer perspektivischen Ansicht in Explosionsdarstellung ein weiteres Ausführungsbeispiel eines Sonnenrollos mit einem am Ende der Wikkelwelle angebrachten Kettenrad;
- Fig. 17: in einer perspektivischen Ansicht ein weiteres Ausführungsbeispiel eines Sonnenrollos mit einem Schraubenantrieb zum Bewegen der Rollobahn; und
- Fig. 18: in einer Schnittansicht entlang der Linie A - A in Fig. 17 eine Führung für den Schraubenantrieb.

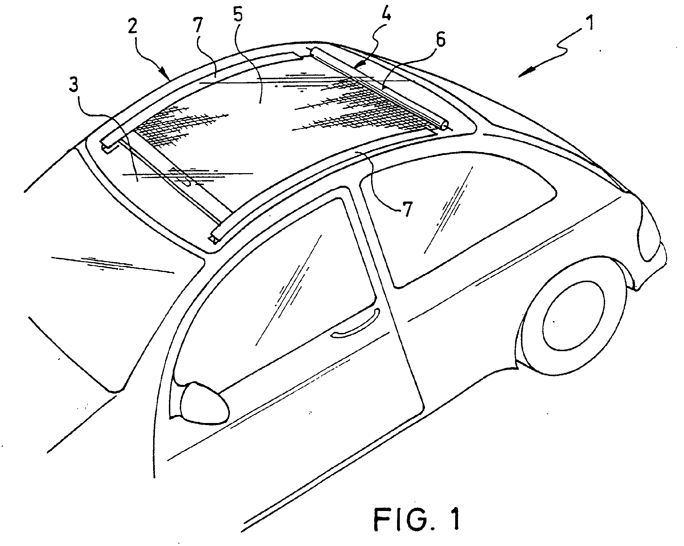

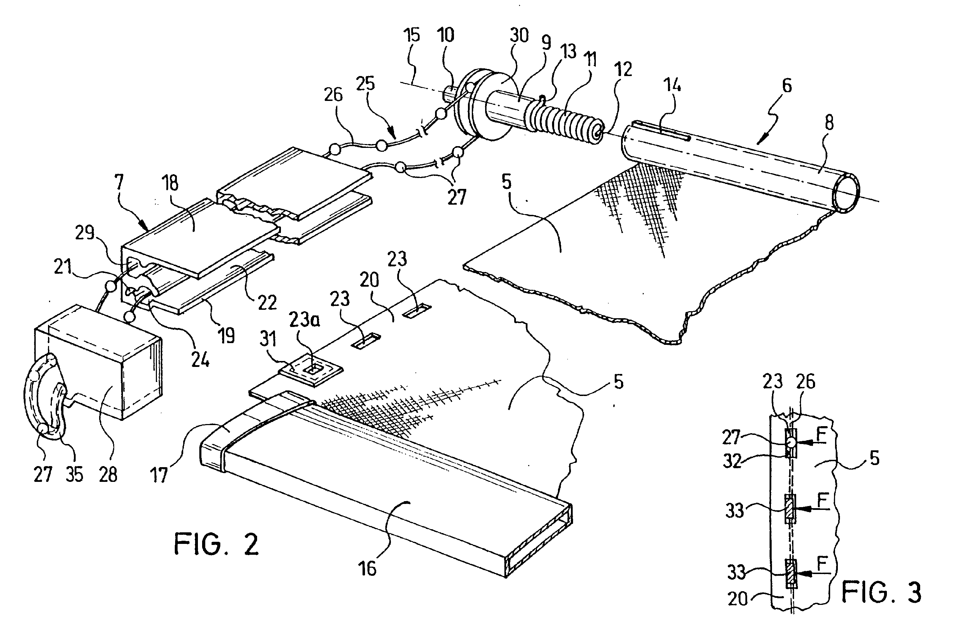

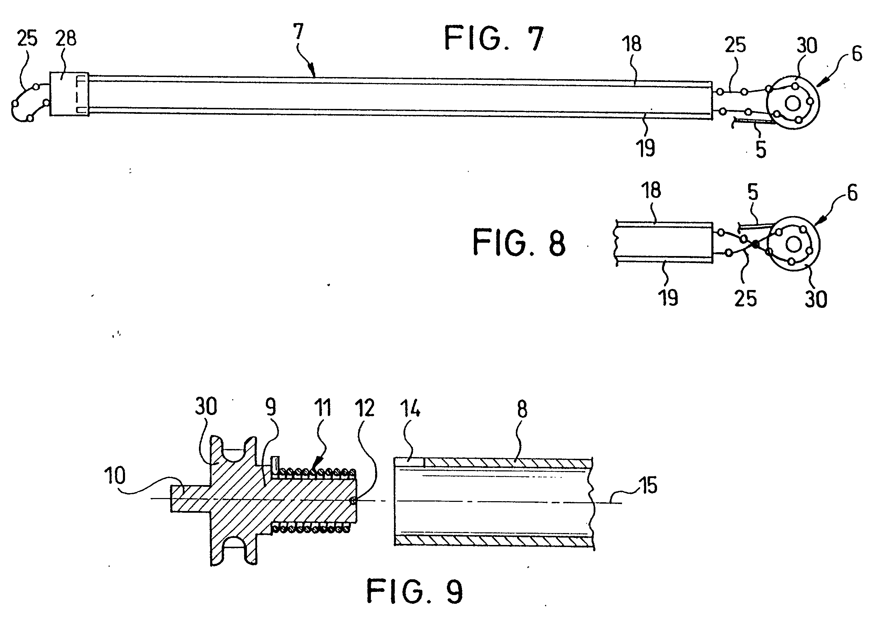

Ein Kraftfahrzeug 1 weist ein Fahrzeugdach 2 mit einem transparenten Dachabschnitt auf, der im dargestellten Ausführungsbeispiel ein fester Glasdeckel 3 ist (siehe Fig. 1). Der transparente Dachabschnitt kann auch ein bewegbarer Deckel zum Verschließen oder zumindest teilweisen Freigeben einer Dachöffnung eines zu öffnenden Fahrzeugdaches, beispielsweise eines Schiebedaches, Schiebehebedaches, Spoilerdaches oder dergleichen, sein. Unterhalb des Fahrzeugdaches 2 bzw. des Glasdeckels 3 ist ein Sonnenrollo 4 angeordnet, das eine Rollobahn 5 und eine Wickelwelle 6 zum Auf- und Abwickeln der Rollobahn 5 sowie zwei seitliche Führungsschienen 7 aufweist, die in Fahrzeuglängsrichtung verlaufen, sich bezüglich des Glasdeckels 3 gegenüberliegen und einer Wölbung des Daches bzw. des Glasdeckels 3 in Längsrichtung folgen. Die Wickelwelle 6 enthält einen hohlzylindrischen Wickelkörper 8 (siehe Fig. 2, worin nur die rechte Seite des Sonnenrollos dargestellt ist), der beidendig jeweils auf einem Lagerteil 9 angeordnet ist, das über einen axial vorstehenden Lagerzapfen 10 am Fahrzeugdach drehbar gelagert ist. Eine wendelförmige Schenkelfeder 11 ist koaxial am Lagerzapfen 10 angebracht (siehe auch Fig. 9) und mit einem Schenkel 12 an diesem festgelegt, während der andere Schenkel 13 mit dem die Schenkelfeder 11 übergreifenden Wickelkörper 8 drehfest verbunden ist, beispielsweise durch Eingriff in eine Axialnut 14 an dem Wickelkörper 8. Der Wickelkörper 8 ist somit gegenüber dem Lagerzapfen 10 um einen Drehwinkel bezüglich der Rotationsachse 15 verschwenkbar, der von der Federkraft der Schenkelfeder 11 abhängig ist.

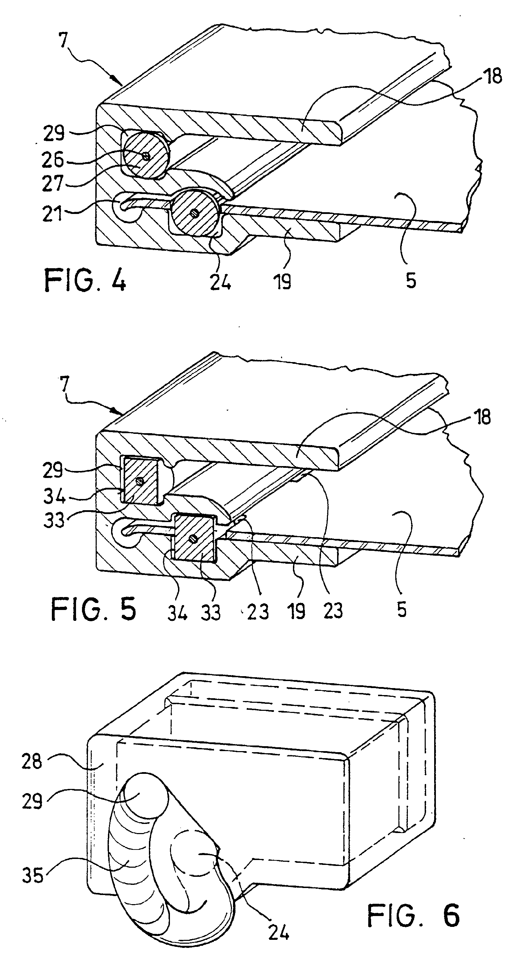

Die von der Wickelwelle 6 abwickelbare Rollobahn 5 ist über ihren vorderseitigen Zugspriegel 16 an der jeweiligen seitlichen Führungsschiene 7 geführt, wobei ein endseitiges Gleitelement 17 des Zugspriegels 16 zwischen einem oberen Schenkel 18 und einem unteren Schenkel 19 der Führungsschiene 7 verschiebbar aufgenommen ist. Die Rollobahn 5 enthält jeweils einen Seitenrand 20, der seitlich über den Zugspriegel 16 bzw. das Gleitelement 17 hinaussteht und in einem Führungsspalt 21 der Führungsschiene 7 (siehe Fig. 2 und 4) aufgenommen und geführt ist. Der Führungsspalt 21 schließt sich an die Innenseite 22 des unteren Schenkels 19, die eine Gleitfläche für das Gleitelement 17 und den Seitenrand 20 der Rollobahn 5 bildet, in der Ebene der Rollobahn 5 nach außen an. In der Rollobahn 5 sind entlang ihres Seitenrandes 20 eine Vielzahl von gleichmäßig voneinander beabstandeten rechteckigen Perforierungen oder Ausnehmungen 23 gebildet, die, wenn der Seitenrand 20 der Rollobahn 5 in dem Führungsspalt 21 aufgenommen ist, in einer als Transport- oder Führungskanal 24 gebildeten Erweiterung angeordnet sind.

In dem Transportkanal 24 ist eine endlose Antriebskette 25 geführt, die ein zugfestes Seil 26 sowie eine Vielzahl von Eingriffselementen in Form von beispielsweise Kugeln 27 enthält, die an dem Seil 24 jeweils in demjenigen Abstand voneinander befestigt sind, der auch die Ausnehmungen 23 in der Rollobahn 5 voneinander trennt. Die Antriebskette 25 verläuft durch den Transportkanal 24 der Führungsschiene 7 nach vorne, über ein am Vorderende der Führungsschiene 7 angebrachtes Abschluß- oder Umlenkteil 28 und in entgegengesetzter Richtung in einen Leer- oder Rücklaufkanal 29 der Führungsschiene 7 und schließlich über ein Antriebsrad 30, das am Lagerteil 10 drehfest angebracht ist, in einem geschlossenen Kreislauf zurück in den Transportkanal 24.

Die an den Zugspriegel 16 angrenzende erste Ausnehmung 23a ist derart an die Form der Kugeln 27 angepaßt, daß eine der ersten Ausnehmung 23a zugeordnete Kugel 27 als Haupteingriffselement darin dauerhaft in formschlüssigem Eingriff spielfrei sowohl in Längsrichtung wie auch in Querrichtung angeordnet ist. Die z. B. rechteckige (siehe Fig. 2) oder auch runde erste Ausnehmung 23a ist von einer Verstärkung 31 an der Rollobahn 5 umgeben, so daß beim Auf- oder Abwickeln der Rollobahn 5 über die Kugel 23a eine Kraft in Längsrichtung auf die Antriebskette 25 sicher übertragen werden kann.

An dem entsprechend der jeweiligen Auszugstellung der Rollobahn 5 in der Führungsschiene 7 bzw. in dem Führungsspalt 21 aufgenommenen Abschnitt des Seitenrandes 20 ist somit in jeder Ausnehmung 23 eine Kugel 27 der Antriebskette 25 im Eingriff (siehe Fig. 3), wobei jede Kugel 27 am Außenrand 32 der Ausnehmung 23 mit einer nach außen gerichteten Spannkraft (durch den Pfeil F schematisch dargestellt) anliegt, so daß die Rollobahn 5 in Querrichtung gespannt gehalten ist, während sie in Längsrichtung gemeinsam mit der Antriebskette 25 verschiebbar ist. Innerhalb der rechteckigen Ausnehmung 23 ist die Kugel 27 in Längsrichtung in etwa mittig mit beidseitigem Spiel zum Vorder- bzw. Hinterrand der Ausnehmung 23 aufgenommen. Statt der Kugeln 27 können als Eingriffselemente auch z. B. auf der äußeren Eingriffsseite abgeflachte Elemente wie z. B. Scheiben oder Platten 33 (siehe Fig. 3 und 5) vorgesehen sein, die aufgrund eines Linienkontaktes ihrer ebenen Seitenfläche 34 (im Gegensatz zum Punktkontakt der Kugel) mit dem Außenrand 32 der Ausnehmung 23 eine gleichmäßigere Kraftübertragung auf die Rollobahn 5 in Querrichtung ermöglicht.

Somit ergibt sich ein geschlossener Kraftfluß vom Antriebsrad 30, über das die Kugeln 27 der Antriebskette 25 in Umfangsrichtung schlupffrei laufen, über die Antriebskette 25 in dem Leerkanal 29 und die erste Kugel 27 in der ersten Ausnehmung 23a auf die Rollobahn 5, die wiederum auf dem mit dem Antriebsrad 30 gekoppelten Wickelkörper 8 aufgerollt ist. Die Spannung der Rollobahn 5 in Längsrichtung wird durch die Vorspannung des Wickelkörpers 8 aufgrund der Federvorspannung der Schenkelfeder 11 gegenüber dem Lagerteil 9 erreicht. Die Längsspannung der Rollobahn 5 kann über die gesamte Auszuglänge stets gleichmäßig aufrechterhalten werden, da nur die erste Kugel 27 in der ersten Ausnehmung 23a in Längsrichtung festgelegt ist und die übrigen Kugeln 27 in Längsrichtung mit Spiel in ihren Ausnehmungen 23 aufgenommen sind. Die Querspannung und die Längsspannung ermöglichen es, daß die Rollobahn 5 ohne zusätzliche Zwischenspriegel der Wölbung des Fahrzeugdaches in Längsrichtung folgen kann.

Die Längsspannung in der Rollobahn 5 kann bei der Montage des Wickelkörpers 8 auf dem Lagerteil 9 dadurch eingestellt werden, daß der Wickelkörper 8 mit der entsprechend rotatorisch vorgespannten Schenkelfeder 11 gekoppelt wird, wobei für unterschiedliche Kopplungsstellungen beispielsweise an der Stirnseite des Wickelkörpers 8 mehrere über den Umfang verteilte Axialnuten 14 gebildet sein können.

Beim Ausziehen und Abrollen der Rollobahn 5 von der Wickelwelle 6 bzw. dem Wickelkörper 8, entweder durch manuelle Betätigung oder einen z. B. auf den Zugspriegel wirkenden Antrieb, nimmt der Wickeldurchmesser auf dem Wickelkörper 8 ab, während der für die Antriebskette 25 relevante Durchmesser des Antriebsrades 30 konstant ist. Der sich dadurch ergebende Wegunterschied zwischen der bewegten Antriebskette 25 und der Rollobahn 5 in Längsrichtung wird durch eine relative Verdrehung des die Rollobahn 5 tragenden Wickelkörpers 8 gegenüber dem Antriebsrad 30 unter zunehmender Vorspannung durch die Schenkelfeder 11 ausgeglichen.

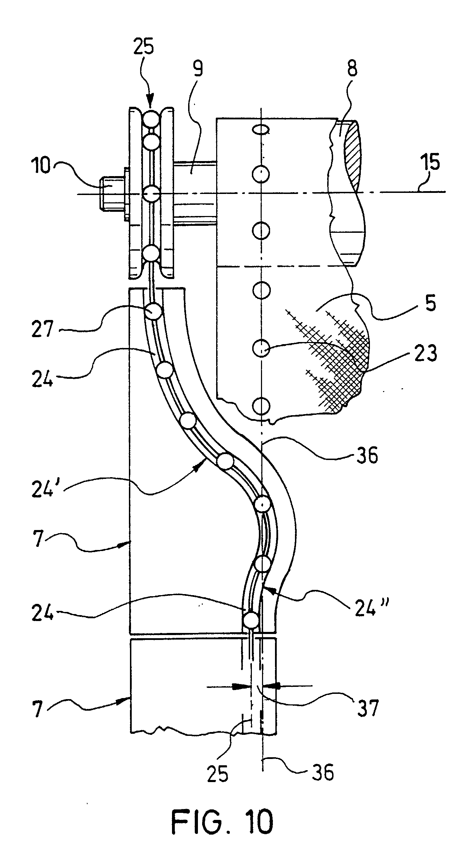

Die Führungsschiene 7 weist einen Einlaufabschnitt 24' auf (siehe Fig. 10), in dem die Kugeln 27 der Antriebskette 25 unter einem spitzen Winkel an die Bewegungsebene 36 der Ausnehmungen 23, die in Längs- oder Auszugsrichtung mit der sich abwickelnden und in Querrichtung nicht gespannten Rollobahn 5 bewegt werden, herangeführt und in die Ausnehmungen 23 eingefügt werden. Nachdem die Kugeln 27 in den Ausnehmungen 23 in Eingriff gebracht worden sind, werden sie in einem sich anschließenden kurzen Spannabschnitt 24" des Führungskanals 24 in Querrichtung um eine geringe Wegstrecke 37 nach außen geführt, so daß sie dabei die Rollobahn 5 in Querrichtung spannen.

In der Offenstellung des Sonnenrollos verbleibt der Zugspriegel 16 am hinteren Ende der Führungsschiene 7, wobei auch die Rollobahn 5 mit der verstärkten ersten Ausnehmung 23a in der Führungsschiene 7 verbleibt und der ständige Eingriff der Kugel 27 bzw. des Eingriffselements und somit der geschlossene Kraftfluß erhalten bleibt.

Die Antriebskette 25 kann (siehe Fig. 2 und 7) von dem oberen Rücklaufkanal 29 kommend in einer einfachen Umlenkung über das Antriebsrad 30 und in den unteren Führungskanal 24 geführt sein. Die Rollobahn 5 gleitet dabei z. B. an der Innenseite 22 des unteren Schenkels 19 der Führungsschiene 7. In alternativer Gestaltung kann die Antriebskette 25 zwischen der Führungsschiene 7 und dem Antriebsrad 30 sich überkreuzend verlaufen (siehe Fig. 8), wobei die Rollobahn 5 in entgegengesetzter Wickelrichtung auf- und abwickelbar ist und an der Innenseite des oberen Schenkels 18 der Führungsschiene 7 gleitend geführt ist.

Das am Vorderende der Führungsschiene 7 angebrachte Abschluß- oder Umlenkteil 28 (siehe Fig. 1 und 6) enthält eine Führungsbahn 35, die eine Umlenkverbindung für die Eingriffselemente bzw. Kugeln 27 der Antriebskette 25 zwischen dem Rücklaufkanal 29 und dem Führungskanal 24 bildet. Die Führungsbahn 35 kann im Inneren des Umlenkteils 28 oder auch vor diesem gebildet sein. Statt der Führungsbahn kann auch ein Umlenkrad oder eine vergleichbare Umlenkeinrichtung vorgesehen sein.

Das Sonnenrollo 4 kann auch bei einem geöffneten Schiebedach im Fahrbetrieb in ausgezogener Stellung verwendet werden, da aufgrund der Vorspannung in Querrichtung und der seitlich festgelegten Seitenränder der Rollobahn 5 ein Flattern der Rollobahn 5 weitgehend vermieden werden kann.

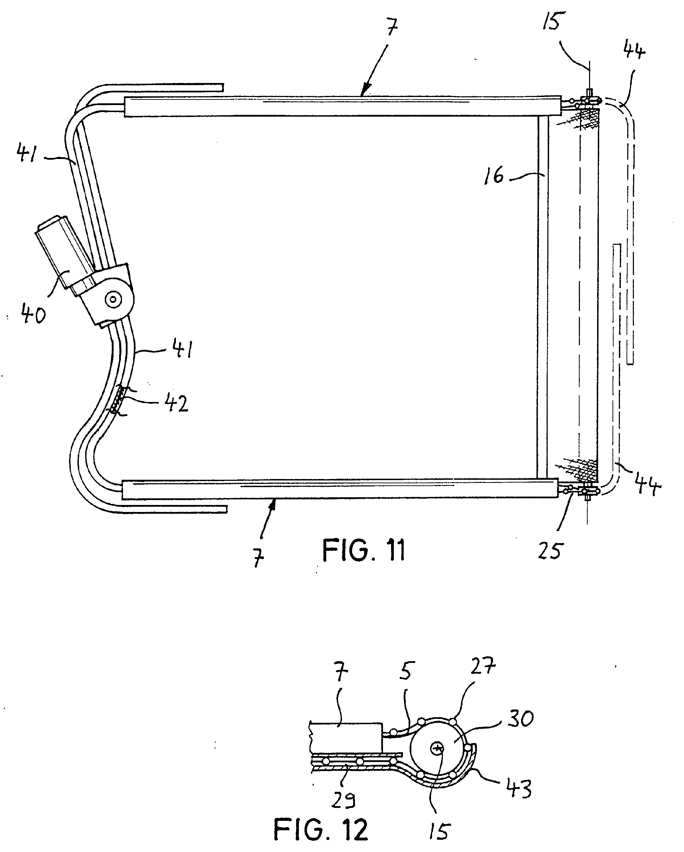

Bei einem abgewandelten Ausführungsbeispiel (siehe Fig. 11 und 12) enthält das Sonnenrollo 4 eine Antriebseinrichtung mit einem Antriebsmotor 40, von dem jeweils ein in einem Rohr 41 geführtes Antriebskabel 42 zu jeder Führungsschiene 7 verläuft und durch den Führungskanal 24 bis zur Rollobahn 5 geführt ist. Die Verbindung des Antriebskabels 42 mit der Rollobahn 5 erfolgt z. B. durch Befestigung am Zugspriegel 16 oder durch eine Verbindung mit der Antriebskette 25, die in diesem Beispiel mit der ersten Kugel 27 in der ersten Ausnehmung 23a beginnt (siehe Fig. 2), über das Antriebsrad 30 geführt ist und sich in den Rücklaufkanal 29 erstreckt. Die Wickelwelle 6 bzw. der Wickelkörper 8 ist mittels einer fahrzeugfest abgestützten Wickelfeder (nicht dargestellt) gegen die Auszugsrichtung (Schließrichtung des Sonnenrollos) vorgespannt. Beim Schließen des Sonnenrollos 4 wird durch Betätigung des Antriebsmotors 40 die Rollobahn 5 von dem Wickelkörper 8 abgewickelt, wobei die Auszugskraft durch die sich spannende Wickelfeder zunimmt. Beim Ausziehen der Rollobahn 5 werden in der schon beschriebenen Weise auf jeder Seite der Rollobahn 5 die Eingriffselemente bzw. Kugeln 27 der Antriebskette 25 in die Ausnehmungen 23 am Seitenrand 20 der Rollobahn 5 in Eingriff gebracht und durch nach außen gerichtete Querbewegung bringen sie die Querspannung auf die Rollobahn 5 auf. Das freie Ende der Antriebskette 25 wird beim Schließen des Sonnenrollos 4 aus dem Rücklaufkanal 29 gezogen. Beim Öffnen des teilweise oder gänzlich geschlossenen Sonnenrollos 4 wird durch entsprechende Betätigung des Antriebsmotors 40 und durch Unterstützung der Wickelfeder die Rollobahn 5 zurückgeschoben und wieder aufgewikkelt. Dabei wird die Antriebskette 25 von der Rollobahn 5 entkoppelt und über das Antriebsrad 30 in den Rücklaufkanal 29 zurückgeschoben. Die Antriebskette 25 ist zu diesem Zweck mit einem ausreichend drucksteifen Seil 26 oder anstatt des Seiles 26 mit teilflexiblen Verbindungselementen zwischen den Kugeln 27 gebildet. Zusätzlich kann eine Führungsschiene 43 vorgesehen sein (Fig. 12), die das Antriebsrad 30 umgibt und ein Ausweichen der geschobenen Antriebskette 25 vom Antriebsrad 30 verhindert.

Alternativ kann das freie Ende jeder Antriebskette 25 in einem zusätzlichen Auslaufrohr 44 aufgenommen sein (in Fig. 11 mit unterbrochenen Linien dargestellt) und beim Schließen des Sonnenrollos 4 daraus hervorgezogen und beim Öffnen des Sonnenrollos 4 in dieses hineingeschoben werden.

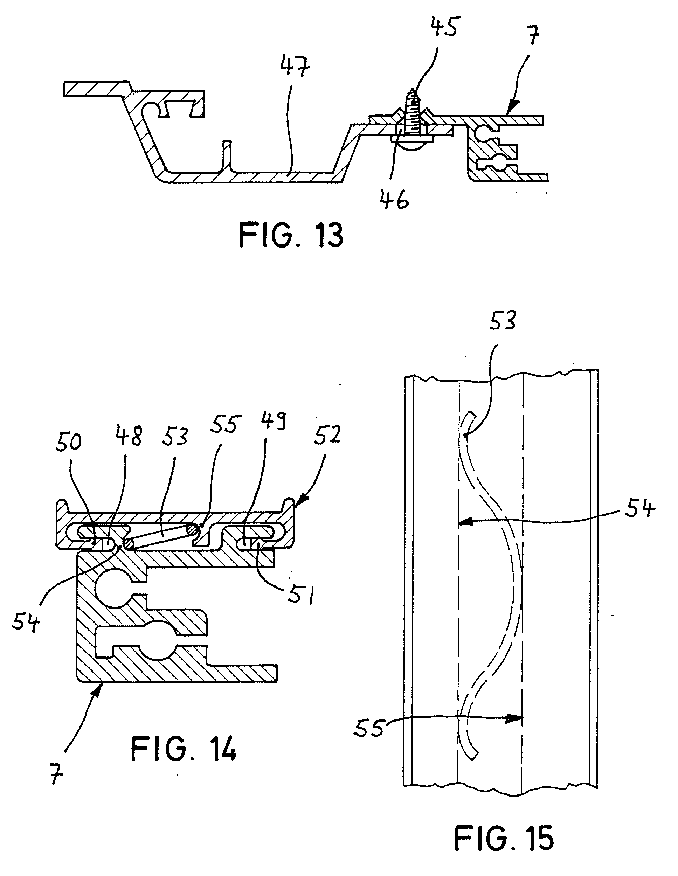

Fig. 13 zeigt die Befestigung der Führungsschiene 7 mittels einer Schraube 45, die ein Langloch 46 durchsetzt, das in Querrichtung der Führungsschiene 7 an einem Dachrahmenteil 47 gebildet ist. Auf diese Weise kann die Führungsschiene 7 am Dachrahmenteil 47 bei der Montage oder nachträglich auf den erforderlichen Abstand zur gegenüberliegenden Führungsschiene und damit auf eine gewünschte Querspannung der Rollobahn 5 eingestellt werden. Die Führungsschiene 7 ist mit mehreren Schrauben 45 über ihre Länge am Dachrahmenteil 47 befestigt. Das Einstellspiel kann statt mittels eines Langloches 46 auch durch eine runde Bohrung mit gegenüber dem Schraubenschaft deutlich größerem Durchmesser erzeugt werden.

Bei der in Fig. 14 und 15 dargestellten Befestigung enthält die Führungsschiene 7 an ihrer Oberseite zwei seitliche Längsnuten 48 und 49, die sich in entgegengesetzte Richtungen öffnen und in denen gegeneinander gerichtete Halteschenkel 50 und 51 eines Dachrahmenteils 52 verschiebbar eingreifen, wobei jedoch die Halteschenkel 50 und 51 die Führungsschiene 7 in vertikaler Richtung spielfrei halten. Eine wellenförmig gebogene Blattfeder 53 ist zwischen einem Anschlag 54 an der Führungsschiene 7 und einem Anschlag 55 an dem Dachrahmenteil 52 eingelegt und spannt die Führungsschiene 7 in Querrichtung nach außen vor. Auf diese Weise wird bei entsprechend eingestellter Federkraft eine Quervorspannung der Rollobahn 5 auch bei Montagetoleranzen aufrechterhalten.

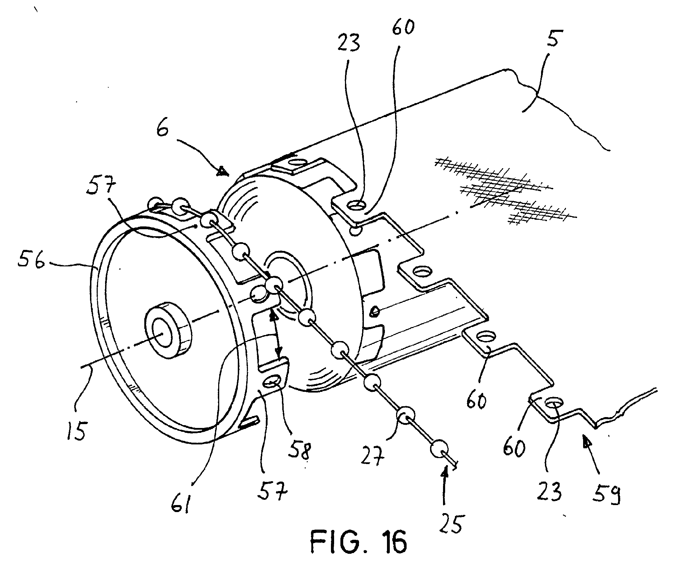

Eine weitere abgewandelte Ausführungsform des Sonnenrollos 4 enthält eine Wickelwelle 6 (siehe Fig. 16), an deren jeweiligem Ende ein Kettenrad 56 drehfest mit der Wickelwelle 6 angebracht ist. Das Kettenrad 56 enthält an seinem Umfang in Richtung der Rotationsachse 15 seitlich zur Rollobahn 5 hervorstehende Zähne 57, die jeweils eine Öffnung 58 zur Aufnahme einer Kugel 27 der Antriebskette 25 enthalten. Die Zähne 57 des an der Wickelwelle 6 angebrachten Kettenrades 56 greifen über den Rand 59 der Rollobahn 5 (in Fig. 16 ist das Kettenrad 56 vor dem Anbringen an der Stirnseite der Wickelwelle 6 von dieser beabstandet dargestellt), die in Richtung der Rotationsachse 15 seitlich hervorstehende Zähne 60 aufweisen, wobei die Zähne 60 jeweils eine Ausnehmung 23 für die Kugeln 27 enthalten. Die Ausnehmungen 58 an den Zähnen 57 des Kettenrades 56 und die Ausnehmungen 23 an den Zähnen 60 am Rand 59 der Rollobahn 5 sind in derselben Ebene senkrecht zur Rotationsachse 15 der Wikkelwelle 6 angeordnet.

Die Breite jedes Zahnes 60 am Rand 58 der Rollobahn 5 ist kleiner wie die Lükken 61 zwischen den Zähnen 57 dem Kettenrad 56, so daß beim Abwickeln der Rollobahn 5 von der Wickelwelle 6 stets ein Zahn 60 der Rollobahn 5 durch eine Lücke 61 am Kettenrad 56 hindurchtreten kann.

Da sich der Wickeldurchmesser an der Wickelwelle 6 beim Auf- und Abwickeln der Rollobahn 5 ändert, ist der Abstand von zwei benachbarten Zähnen 60 über die Länge der Rollobahn 5 an diese Änderung angepaßt, so daß stets das unbehinderte Durchtreten der Zähne 60 der Rollobahn 5 durch die Lücken 61 am Kettenrad 56 gewährleistet ist. Die Antriebskette 25 kann auf diese Weise ohne eine spitzwinklige Zuführung mit den Ausnehmungen 23 an der sich abwickelnden Rollobahn 5 in Eingriff gebracht werden.

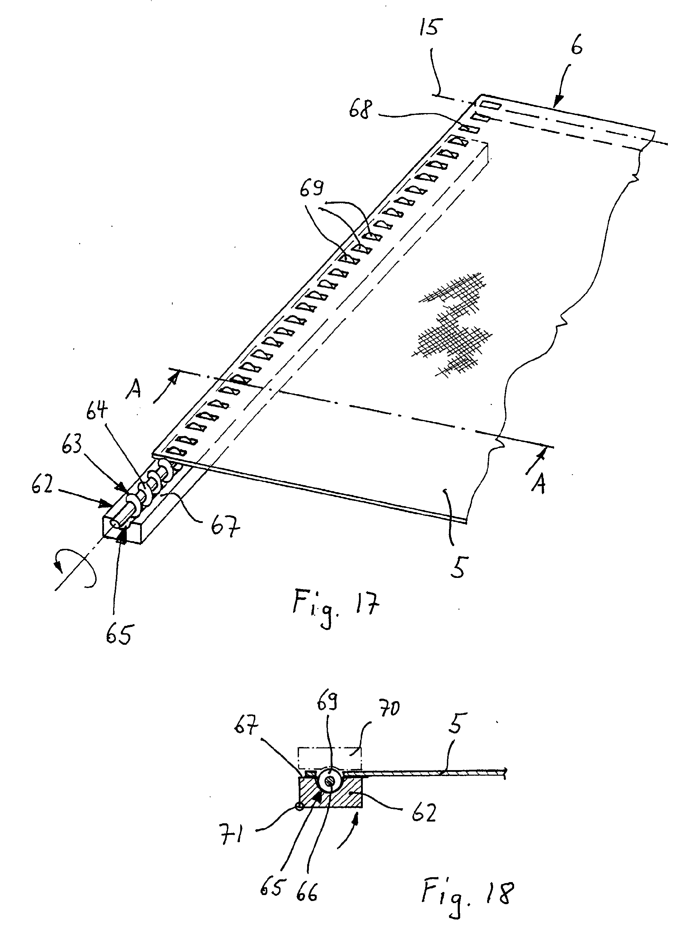

Ein weiteres Ausführungsbeispiel eines Sonnenrollos (siehe Fig. 17 und 18) enthält einen Schraubenantrieb zum Bewegen der Rollobahn 5 entlang einer Führungsschiene 62. Der Schraubenantrieb weist ein Antriebskabel 63 auf, wie es bei einem Schiebedachantrieb oder bei dem in Fig. 11 gezeigten Antrieb verwendet wird. Das eine kontinuierliche Schraubwendel 64 enthaltende Antriebskabel 63 ist in einer rinnenförmigen oder annähernd halbzylindrischen Längsausnehmung 65 in der Führungsschiene 62 derart aufgenommen, daß seine Seele 66 unterhalb der Oberseite 67 der Führungsschiene 62 angeordnet ist und nur die Schraubwendel 64 nach oben überragt. Die auf die Wickelwelle 6 auf- und abwikkelbare Rollobahn 5 enthält an ihrem Seitenrand eine Perforierung mit einer Vielzahl von Ausnehmungen 68, die eine solche Größe und Form aufweisen, daß sie, wenn die Rollobahn 5 auf der Führungsschiene 62 aufliegt, die einzelnen, nach oben vorstehenden Abschnitte 69 der Schraubwendel 64 aufnehmen.

Eine zweite Führungsschiene 70 (siehe Fig. 18, in Fig. 17 nicht dargestellt) ist oberhalb der ersten unteren Führungsschiene 62 mit einem definierten Abstand angeordnet, in dem die Rollobahn 5 in Längsrichtung verschiebbar gehalten ist. Das Antriebskabel 63 wird zum Verstellen der Rollobahn 5 um seine Längsachse gedreht, so daß die in Längsrichtung "wandernde" Schraubwendel 64, die mit ihren Abschnitten 69 im Eingriff in den Ausnehmungen 68 der Rollobahn 5 ist, die Rollobahn 5 entlang der Führungsschienen 62, 70 verschiebt. In Querrichtung ist die Rollobahn 5 zwischen den Schraubwendeln 64 der beiden sich gegenüberliegenden Antriebskabel 63 gespannt gehalten.

Für die Montage kann die untere Führungsschiene 62 um eine Längsschwenkachse 71 verschwenkbar gelagert sein, so daß sie gemeinsam mit dem Antriebskabel 63 und der zumindest mit ihrem Anfangsabschnitt zwischengelegten Rollobahn 5 gegen die obere Führungsschiene 70 schwenkbar ist. Andererseits kann das Antriebskabel 63 bei der Montage zusammen mit der Rollobahn 5 in die Längsführungen eingeschoben werden.

Statt des Antriebskabels 63 kann auch ein Schnecken- oder Schraubentrieb verwendet werden. Der Seitenrand der Rollobahn 5 kann im Bereich der Ausnehmungen 68 verstärkt sein, um eine Beschädigung der Rollobahn 5 zu vermeiden. Die Kraftübertragung auf die Rollobahn 5 erfolgt in Längsrichtung an allen Ausnehmungen 68, an denen die Schraubwendel 64 bzw. ihre Abschnitte 69 im Eingriff sind, gleichmäßig. So kann die Rollobahn 5 auch in Längsrichtung gespannt gehalten werden.

### Bezugszeichenliste

- 1: Kraftfahrzeug
- 2: Fahrzeugdach
- 3: Glasdeckel
- 4: Sonnenrollo
- 5: Rollobahn
- 6: Wickelwelle
- 7: Führungsschiene
- 8: Wickelkörper
- 9: Lagerteil
- 10: Lagerzapfen
- 11: Schenkelfeder
- 12: Schenkel
- 13: Schenkel
- 14: Axialnut
- 15: Rotationsachse
- 16: Zugspriegel
- 17: Gleitelement
- 18: oberer Schenkel
- 19: unterer Schenkel
- 20: Seitenrand
- 21: Führungsspalt
- 22: Innenseite
- 23: Ausnehmung
- 24: Führungskanal
- 25: Antriebskette
- 26: Seil
- 27: Kugel
- 28: Umlenkteil
- 29: Rücklaufkanal
- 30: Antriebsrad
- 31: Verstärkung
- 32: Außenrand
- 33: Scheibe
- 34: Seitenfläche
- 35: Führungsbahn
- 36: Bewegungsebene
- 37: Wegstrecke
- 38 39 40: Antriebsmotor
- 41: Rohr
- 42: Antriebskabel
- 43: Führungsschiene
- 44: Auslaufrohr
- 45: Schraube
- 46: Langloch
- 47: Dachrahmenteil
- 48: Längsnut
- 49: Längsnut
- 50: Halteschenkel
- 51: Halteschenkel
- 52: Dachrahmenteil
- 53: Blattfeder
- 54: Anschlag
- 55: Anschlag
- 56: Kettenrad
- 57: Zahn
- 58: Öffnung
- 59: Rand
- 60: Zahn
- 61: Lücke
- 62: Führungsschiene
- 63: Antriebskabel
- 64: Schraubwendel
- 65: Längsausnehmung
- 66: Seele
- 67: Oberseite
- 68: Ausnehmung
- 69: Abschnitt der Schraubwendel
- 70: Führungsschiene
- 71: Längsschwenkachse

## Patentansprüche

1. Sonnenrollo für ein Fahrzeugdach mit einer unterhalb des Daches angeordneten und auf eine Wickelspule aufwickelbaren Rollobahn, deren gegenüberliegende Seitenränder in Rollo-Bewegungsrichtung an Führungsschienen verschiebbar geführt sind und in Querrichtung unter Vorspannung der Rollobahn gehalten sind,
**dadurch gekennzeichnet,**
**daß** an den Führungsschienen (7; 62, 70) geführte Eingriffselemente (27; 33; 69) an die Seitenränder (20) der sich bewegenden Rollobahn (5) ankoppelbar sind und daß die angekoppelten Eingriffselemente (27; 33; 69) die Rollobahn (5) in Querrichtung unter Vorspannung halten.

2. Sonnenrollo nach Anspruch 1,
**dadurch gekennzeichnet, daß** im Bereich des vorderen Auszugsrands (16) der Rollobahn (5) ein Haupt-Eingriffselement (27) am jeweiligen Seitenrand (20) in Eingriff ist zur Führung der Rollobahn (5) in Rollo-Bewegungsrichtung.

3. Sonnenrollo nach Anspruch 1 oder 2,
**dadurch gekennzeichnet, daß** die Eingriffselemente (27; 33) an einem zugfesten Trägerelement (26), insbesondere einem Seil, voneinander beabstandet angeordnet sind.

4. Sonnenrollo nach einem der Ansprüche 1 bis 3,
**dadurch gekennzeichnet, daß** die Eingriffselemente (27; 33) in Ausnehmungen (23) an den Seitenrändern (20) eingreifen und in den Ausnehmungen (23) mit Spiel in Rollo-Bewegungsrichtung aufgenommen sind.

5. Sonnenrollo nach einem der Ansprüche 1 bis 4,
**dadurch gekennzeichnet, daß** die Eingriffselemente (27) kugelförmig gebildet sind.

6. Sonnenrollo nach einem der Ansprüche 1 bis 5,
**dadurch gekennzeichnet, daß** die Eingriffselemente (33) eine ebene Eingriffsseite aufweisen.

7. Sonnenrollo nach einem der Ansprüche 1 bis 6,
**dadurch gekennzeichnet, daß** die Eingriffselemente (27; 33) eine umlaufende Antriebskette (25) bilden, die über ein mit der Wickelwelle (6) gekoppeltes Antriebsrad (30) geführt ist.

8. Sonnenrollo nach einem der Ansprüche 1 bis 7,
**dadurch gekennzeichnet, daß** jede Führungsschiene (7) für die Eingriffselemente (27; 33) einen Kanal (24) aufweist, der in einem Führungsschlitz (21) für den Seitenrand (20) der Rollobahn (5) gebildet ist.

9. Sonnenrollo nach einem der Ansprüche 1 bis 8,
**dadurch gekennzeichnet, daß** jede Führungsschiene (7) einen Rücklaufkanal (29) für die Eingriffselemente (27; 33) aufweist.

10. Sonnenrollo nach einem der Ansprüche 1 bis 9,
**dadurch gekennzeichnet, daß** das Antriebsrad (30) über eine Feder (11) mit der Wickelwelle (8) gekoppelt ist und daß über die Antriebskette (25), den Seitenrand (20) der Rollobahn (5), die Wickelwelle (6) und das Antriebsrad (30) ein geschlossener Kraftfluß gebildet ist.

11. Sonnenrollo nach Anspruch 10,
**dadurch gekennzeichnet, daß** die Feder eine torsionsbelastete Schraubenfeder (11) ist, die beim Abwickeln der Rollobahn (5) aufgrund des variierenden Wickeldurchmessers gegenüber dem konstanten Durchmesser des Antriebsrades (30) eine Vorspannungsveränderung erfährt.

12. Sonnenrollo nach einem der Ansprüche 1 bis 11,
**dadurch gekennzeichnet, daß** der Zugspriegel (16) manuell oder über einen Antrieb betätigbar ist.

13. Sonnenrollo nach einem der Ansprüche 1 bis 12,
**dadurch gekennzeichnet, daß** die Antriebskette (25) zwischen der Führungsschiene (7) und dem Antriebsrad (30) sich überkreuzend verläuft.

14. Sonnenrollo nach einem der Ansprüche 1 bis 13,
**dadurch gekennzeichnet, daß** jede Führungsschiene (7) einen Einlaufabschnitt (24') aufweist, in dem die Eingriffselemente (27; 33) in den Eingriff mit dem Seitenrand (20) der Rollobahn (5) gebracht werden und die Rollobahn (5) in Querrichtung spannen.

15. Sonnenrollo nach einem der Ansprüche 1 bis 14,
**dadurch gekennzeichnet, daß** es eine Antriebseinrichtung mit einem Antriebsmotor (40) aufweist, von dem jeweils ein Antriebskabel (42) zu jeder Führungsschiene (7) verläuft und mit der Rollobahn (5) gekoppelt ist, die von einer durch Federkraft vorgespannten Wickelwelle (6) abwickelbar ist.

16. Sonnenrollo nach Anspruch 15,
**dadurch gekennzeichnet, daß** eine die Eingriffselemente (27; 33) enthaltende Antriebskette (25) ein freies Auslaufende aufweist, das in einen Rücklaufkanal (29) der Führungsschiene (7) oder in ein Auslaufrohr (44) eingeschoben wird.

17. Sonnenrollo nach einem der Ansprüche 1 bis 16,
**dadurch gekennzeichnet, daß** die Rollobahn (5) an ihren Seitenrändern (59) Zähne (60) aufweist,
daß an den beiden Enden der Wickelwelle (6) jeweils ein die Antriebskette (25) führendes Kettenrad (56) drehfest mit der Wickelwelle (6) angebracht ist und das Kettenrad (56) Zähne (57) für einen jeweiligen Eingriff mit den Eingriffselementen (27) der Antriebskette (25) aufweist,
daß die Zähne (57) des Kettenrades (56) bei gemeinsamer Rotation des Kettenrades (56) mit der Wickelwelle (6) über die zugeordneten Zähne (60) am Seitenrand (59) der aufgewickelten Rollobahn (5) positioniert werden und anschließend durch Lücken zwischen den Zähnen (60) der Rollobahn (5) hindurchtreten, wobei die Antriebskette (25) während dem Abwickeln der Rollobahn (5) von der Wickelwelle (6) mit Ausnehmungen (23) an den Zähnen (60) der Rollobahn (5) in Eingriff kommt und mit der Rollobahn (5) weiterbewegt wird.

18. Sonnenrollo nach Anspruch 1,
**dadurch gekennzeichnet, daß** die Eingriffselemente Abschnitte (69) eines schrauben- oder schneckenförmigen Antriebsteils (64) sind, die in Ausnehmungen am Seitenrand der Rollobahn (5) eingreifen, durch Rotation des Antriebsteils (64) um seine Längsachse in Längsrichtung bewegt werden und dabei die zwischen zwei Führungsteilen (62, 70) geführte Rollobahn (5) mitnehmen.

19. Sonnenrollo nach einem der Ansprüche 1 bis 18,
**dadurch gekennzeichnet, daß** die Führungsschienen (7; 62, 70) in Querrichtung einstellbar sind.

20. Sonnenrollo nach einem der Ansprüche 1 bis 18,
**dadurch gekennzeichnet, daß** die Führungsschienen (7; 62, 70) in Querrichtung federelastisch gelagert sind.

21. Sonnenrollo nach einem der Ansprüche 1 bis 20,
**dadurch gekennzeichnet, daß** die Führungsschienen (7) in Rollo-Bewegungsrichtung entsprechend einer Fahrzeugdachwölbung gekrümmt sind.

22. Sonnenrollo nach einem der Ansprüche 1 bis 21,
**dadurch gekennzeichnet, daß** es unter einem Fahrzeugdach (2) mit einem festen transparenten Dachabschnitt oder mit einer Dachöffnung mit einem bewegbaren insbesondere transparenten Deckel angeordnet ist.
